# EUROPÄISCHE PATENTANMELDUNG

(11) **EP 1 506 979 A1**
(43) Veröffentlichungstag der Anmeldung: **16.02.2005**
(21) Anmeldenummer: 04018250.3
(22) Anmeldetag: 02.08.2004
(51) Int. Cl.: C08L 1/26, C04B 40/00, C04B 28/02, C04B 24/38

(54) **Celluloseetherzusammensetzung für die Extrusion mineralischer Formkörper sowie ein Verfahren zur Extrusion mineralischer Formkörper unter Verwendung dieser Celluloseetherzusammensetzung**

(30) Priorität: 12.08.2003 DE 10337012
(71) Anmelder: Wolff Cellulosics GmbH & Co.KG, 29656 Walsrode (DE)
(72) Erfinder: Bayer, Roland, Dr., 29664 Walsrode (DE); Höhl, Frank, 29643 Neuenkirchen (DE); Schlesiger, Hartwig, Dr., 29683 Bad Fallingbostel (DE); Kull, Arne Henning, Dr., 29699 Bomlitz (DE); Pannek, Jörn, Dr., 29683 Bad Fallingbostel (DE); Engelhardt, Jürgen, Dr., 29683 Bad Fallingbostel (DE); Kressdorf, Burkhard, Dr., 29683 Bad Fallingbostel (DE)
(74) Vertreter: Pettrich, Klaus-Günter, Dr.

(57) **Zusammenfassung**

Beschrieben wird eine Celluloseetherzusammensetzung als Additiv zur Extrusion mineralischer Massen, enthaltend 70 bis 99,9 Gew.-% Celluloseether und 0,1 bis 30 Gew.-% superabsorbierendes Polymer.

Ebenfalls beschrieben wird ein Verfahren zur Extrusion mineralischer Massen unter Einsatz dieser Zusammensetzungen als Additiv.

## Beschreibung

Die vorliegende Erfindung betrifft Additive, die eine Celluloseethherzusammensetzung zum Einsatz als Wasserretentions-, Plastifizierungs- und Gleitmittel bei der Extrusion mineralischer Massen enthalten. Ferner betrifft sie die Verwendung dieser Celluloseetherzusammensetzung in Baustoffsystemen sowie ein Verfahren zur Extrusion mineralischer Massen unter Einsatz dieser Additive. Der Einsatz dieser Methylcellulosezusammensetzung führt beim Extrusionsprozess zu verbesserten Prozesseigenschaften sowie zu einer höheren Oberflächenqualität des extrudierten Körpers.

Die Extrusion mineralischer Massen wird seit vielen Jahren technisch angewendet, insbesondere ist jedoch die Extrusion zementgebundener Massen in den Fokus der Aufmerksamkeit gerückt.

Die Zementextrusion ist ein Verfahren, pastöse zementhaltige Mischungen durch Pressen durch einen Düsenmund in beliebige Profile zu formen. Die auf diese Weise erhaltenen Elemente lassen sich vielfältig einsetzen, insbesondere in Bauanwendungen. Hier können sie zum einen Zementmassen ersetzen, die bisher gegossen wurden, andererseits sind aber auch Profilformen zugänglich, die durch das konventionelle Verfahren des Gießens nicht zugänglich sind. Die Beispiele für extrudierte Bauelemente reichen von kleinen Eckprofilen, die nur eine Breite von wenigen Zentimetern haben, bis zu großen Bauplatten, die eine Breite von 60 cm und theoretisch beliebige Länge haben können. Extrudierte Zementmassen enthalten als Bestandteile grundsätzlich Zement als Bindemittel, eventuell auch weitere Bindemittel, ferner Zuschläge (Sande) und/oder Leichtzuschläge sowie Celluloseether, insbesondere Methylcellulose als Wasserrückhalte-, Plastifizierund Gleitmittel.

Unter Methylcellulose werden in dieser Schrift alle methylgruppenhaltigen Celluloseether wie Methylcellulose, Methylhydroxyethylcellulose, Methylhydroxypropylcellulose, Methylhydroxyethylhydroxypropylcellulose, Methylethylhydroxyethylcellulose und Methylhydroxyethylhydroxybutylcellulose verstanden. Häufig werden der Rezeptur auch natürliche und/oder synthetische Fasern zugesetzt. Die Einsatzmenge der Methylcellulose bzw. der Celuloseetherzusammensetzung liegt im Allgemeinen zwischen 0,5 und 6%, bezogen auf die Extrusionsmasse ohne Wasser.

Ob sich eine Masse extrudieren lässt und zu verkaufsfähigen Produkten verarbeiten lässt, wird durch verschiedene Parameter bestimmt. Die Masse muss sich während des Extrusionsprozesses sehr plastisch verhalten und sollte sich mit möglichst geringem Druck sowie möglichst hoher Geschwindigkeit homogen aus dem Düsenmund austragen lassen. Dabei spielt die Oberfläche der extrudierten Masse eine entscheidende Rolle. Sie sollte rissfrei und möglichst glatt sein. Gute Oberflächeneigenschaften sind vor allem nach längerer Extrusionsdauer ein Problem, da sich nach längerer Betriebsdauer durch die Reibung der abrasiven mineralischen Teilchen höhere Temperaturen einstellen. Die Qualität der Oberfläche einer extrudierten Masse nimmt im Allgemeinen um so mehr ab, je höher die Temperatur der extrudierten Masse ist. Als besonders kritisch gelten Extrusionstemperaturen um die 60°C. Alle diese Probleme sind bisher nur ungenügend gelöst worden.

Dieser Erfindung liegt entsprechend die Aufgabe zugrunde, ein Wasserretentions-, Plastifizierungs- und Gleitmittel zu finden, welches verbesserte Eigenschaften hinsichtlich des Extrusionsprozesses und der Oberflächengüte des extrudierten Profils aufweist, insbesondere bei erhöhten Temperaturen. Unter erhöhten Temperaturen werden hier Temperaturen von 30-65°C, insbesondere jedoch von 45-65°C verstanden. Diese verbesserten Eigenschaften können beispielsweise einen niedrigeren Austragsdruck am Düsenmund, eine glattere Oberfläche des Extrudates, eine geringere Rissbildung des extrudierten Profils oder eine höhere Extrusionsgeschwindigkeit bedeuten.

Es wurde gefunden, dass sich eine zementhaltige Masse bei erhöhten Temperaturen besser mit einem Additiv bestehend aus einer Mischung aus Celluloseethern und superabsorbierenden Polymeren extrudieren lässt als mit derselben Menge Additiv, ausschließlich aus Celluloseether allein bestehend. Es lässt sich der Druck am Düsenmund des Extruders reduzieren, die Oberflächengüte (Glätte, Homogenität) des Extrudates steigern und die Rissbildung im Extrudat stark reduzieren.

Gegenstand der Erfindung ist daher eine Celluloseetherzusammensetzung als Additiv zur Extrusion mineralischer Massen, enthaltend 70 bis 99,9 Gew.-% Celluloseether und 0,1 bis 30 Gew.-% superabsorbierendes Polymer, wobei die Gew.-% der einzelnen Komponenten sich jeweils zu 100 Gew.-% ergänzen.

Bewährt haben sich 0,1-30 Gew.-% Superabsorber (bezogen auf die Gesamtmischung Celluloseether plus Superabsorber), insbesondere 0,2-9,9 %. Bei einer angenommenen Celluloseether-Einsatzmenge von 1 % entspricht dies einer Einsatzmenge von Superabsorbern (bezogen auf alle Mischungskomponenten) von 0,001 bis 0,3, bevorzugt aber von 0,002 - 0,099 Gew-%.

In zahlreichen Patentanmeldungen wurden Additivzusammensetzungen beansprucht, die verschiedene Parameter des Extrusionsprozesses oder Eigenschaften des Endproduktes positiv beeinflussen sollen.

WO 01/16048 A1 beansprucht eine Abmischung zwischen sog. "viscosity enhancing agents" (u.a Celluloseethern) und Dispergiermitteln, da zwischen beiden synergistische Effekte aufgefunden wurden, die in einer Einsatzmengenreduzierung resultieren können. Als Dispergiermittel in der Abmischung werden verschiedene Sulfonate beansprucht, im Text werden jedoch auch Polymere auf Basis von Acrylsäure, Acrylsäureestern, und andere nicht nähere spezifizierte Acrylpolymere erwähnt. Diese Polyacrylate sind wegen ihrer fehlenden starken dreidimensionalen Vernetzung vollständig wasserlöslich und deutlich niedermolekularer als Superabsorber auf der Basis von Polyacrylat. Sie können linear, verzeigt oder geringfügig vernetzt sein, bleiben jedoch immer vollständig wasserlöslich. In einem zementhaltigen Mörtelsystem wie dem oben angeführten System der extrudierten Zementmassen führen sie zu einer unerwünschten Verringerung des Wasserbedarfs, während der Einsatz von Superabsorbern den Wasserbedarf signifikant erhöht. Es war deshalb nicht zu erwarten, dass Superabsorber trotz ihrer ähnlichen chemischen Zusammensetzung die Extrusionseigenschaften eines Zementmörtels bei hohen Temperaturen verbessern.

EP-A-0 131 090 A1 beschreibt Abmischungen von wasserlöslichen Polysaccharid-Polymeren auf Basis von Cellulose, Guar oder Stärke mit einem wasserquellbaren, aber nicht wasserlöslichen Polymer auf Basis eines teilhydrolysierten Polyacrylamids für den Einsatz in verschiedenen Baustoffen (wie zementgebundenen Fliesenklebern und Putzen, gipsgebundenen Putzen, Tapetenkleister und Beton). Näher eingegangen wird jedoch nur auf zementgebundenen Fliesenkleber. Im Vergleich zu einer Abmischung zwischen einem Polysaccharid-Polymeren und einem unvernetzten (und wasserlöslichen) Polyacrylamid zeigen die Abmischungen mit vernetzten teilhydrolysierten Polyacrylamiden nach Einstellung aller Rezepturen auf eine vergleichbare Konsistenz eine bessere Offenzeit sowie meist höhere Haftzugfestigkeiten des untersuchten Fliesenklebers. Selbst für den Fachmann ist hieraus keineswegs ersichtlich, dass eine ähnliche Mischung aus Cellulosether und Superabsorbern die Oberflächen- und andere beschriebene Eigenschaften bei der extrudierten zementhaltigen Masse bei höheren Temperaturen verbessert. Die Verarbeitungstemperatur der in der oben zitierten EP-A-0 131 090 genannten Baustoffe liegt in der Regel im Bereich der Raumtemperatur. Die hohen Extrusionstemperaturen treten bei anderen extrudierten Massen, wie beispielsweise bei Ton oder der in EP-A-0 131 090 A1 zitierten Keramik nicht auf, da in diesen beiden Fällen die Reibung der Teilchen aneinander geringer ist und somit die Erwärmung der Masse deutlich geringer ist. Insbesondere Schichtsilikate, wie sie im Ton enthalten sind, besitzen eine gute Schmierwirkung.

In der EP-A-327 351 A2 wird ein Blend aus Methylcellulose und vernetzter, unlöslicher Polyacrylsäure zur Verbesserung der Abrutschfestigkeit in Dünnbettmörteln wie beispielsweise Fliesenklebern beansprucht. Auch hier: Weder vom Effekt der Verbesserung der Abrutschfestigkeit noch von der üblichen Anwendungstemperatur im Dünnbettmörtel wäre es dem Fachmann möglich, auf Oberflächeneffekte in extrudierten Zementmassen zu schließen.

In der JP 10-152357 werden extrudierfähige Mörtel beansprucht, die ein redispergierbares und unvernetztes synthetisches Polymer enthalten, das durch (normale oder inverse) Emulsionspolymerisation unter Zuhilfenahme eines polymeren Schutzkolloids und eines Tensids hergestellt worden ist und anschließend durch ein geeignetes Verfahren zu einem Pulver getrocknet worden ist. Durch Zusatz dieser redispergierbaren Polymeren zur Mörtelmischung werden höhere Biegezugfestigkeiten und niedrigere Extrusionsdrücke erhalten. Diese Produkte werden anders als die oben beschriebenen Superabsorber hergestellt und sind im Gegensatz zu Superabsorbern nicht vernetzt, auch wenn sie Acrylatgruppen enthalten können. Extrusionseigenschaften bei höheren Temperaturen sind nicht beschrieben. Es wird ebenfalls nicht von einer höheren Oberflächengüte berichtet.

In der JP 4-164604 wird der Einsatz von stark wasserabsorbierenden Polymeren als Zusatz zu extrudierbaren Zementmassen in Einsatzmengen von 0,1-2 Gew.-%, beansprucht. In diesem Fall werden die wasserabsorbierenden Polymeren zusätzlich zur eingesetzten Methylcellulose verwendet, um über den stark erhöhten Wasserbedarf Leichtbaustoffe zu erhalten, da nach dem Abbinden des Zementes und dem Trocknen der Masse die ehemals aufgequollenen Polymeren Poren hinterlassen. Über Extrusionseigenschaften bei höheren Temperaturen wird nicht berichtet. Nachteilig ist durch den hohen Wasserbedarf insbesondere die sinkende Biege- und Druckfestigkeit von auf diese Weise hergestellten Materialien.

Die Extrusion mineralischer Massen ist ein Verfahren, pastöse bindemittelhaltige Mischungen durch Pressen durch einen Düsenmund in beliebige Profile zu formen. Die auf diese Weise erhaltenen Elemente lassen sich vielfältig einsetzen, insbesondere in Bau- und industriellen Anwendungen. Hier können sie zum einen gegossene Massen ersetzen, andererseits sind aber auch Profilformen zugänglich, die durch das konventionelle Verfahren des Gießens nicht zugänglich sind. Die Beispiele für extrudierte Elemente reichen von kleinen Eckprofilen, die nur eine Breite von wenigen Zentimetern haben, bis zu großen Bauplatten, die eine Breite von 60 cm und theoretisch beliebige Länge haben können. Extrudierte Massen enthalten als Bestandteile grundsätzlich mindestens ein Bindemittel, ferner Zuschläge (z.B. Sande, mineralische Mehle) und/oder Leichtzuschläge sowie Celluloseether, insbesondere Methylcellulose als Wasserrückhalte-, Plastifizier- und Gleitmittel sowie gegebenenfalls Fasern. Unter Bindemitteln werden hier alle mineralischen Bindemittel wie Zement, Gips, Kalkhydrat, Branntkalk, Ton/Lehm, Silikate, spezielle Flugaschen und keramische Bindemittel verstanden.

Unter Zuschlägen werden hier alle Arten von Sanden und Steinmehlen verstanden, wie sie üblicherweise in Baumaterialien eingesetzt werden. Dies sind insbesondere Kiese, Sande, Splitte, Aschen und Mehle auf Basis von Quarz, Kalk (Calciumcarbonat), Dolomit, Kaolin, Marmor, Glas, verschiedenen Arten von Bauschutt, spezielle Flugaschen, Tonen, Bentoniten und anderen Schichtsilikaten. Grundsätzlich lassen sich Zuschläge unterschiedlichster Korngrößen extrudieren, es ist bei der Zusammenstellung der Zuschläge entsprechend dem Anforderungsprofil möglich, bestimmte Kornfraktionen miteinander zu kombinieren, um bestimmte Eigenschaften optimal einzustellen.

Leichtzuschläge sind Zuschläge mit besonders niedriger Dichte. Diese können mineralischer Herkunft sein wie beispielsweise Perlite (Blähton), Blähglas, geblähte Calciumsilikate oder hochporöse natürliche Sande auf Quarz- oder Kalkbasis, sie können aber auch organischen Ursprungs sein wic expandiertes Polystyrol, Polyurethanschaumstoff, Kork usw..

Unter Fasern werden hier alle Arten von Natur- oder synthetischen Fasern verstanden wie beispielsweise Fasern auf Basis von Cellulose, Bambus, Kokos, Polyethylen, Polypropylen, Polyamid, Polyacrylnitril, Kohlenstoff, Glas, Keramik und andere mineralische Fasern. Deren Faserlängen und -dicken können über weite Bereiche variiert werden, um bestimmte Produkteigenschaften zu erzielen.

Die Rezeptur der Celluloseetherzusammensetzung kann neben Celluloseethern auch noch weitere Additive enthalten wie beispielsweise Verflüssiger/Fließmittel (z.B. Sulfonate auf Basis von Melamin oder Naphthalin sowie Polyether), Hydrophobiermittel und Gleitmittel (wie beispielsweise Polyethylenoxid oder verwandte Polymere). Unter Celluloseethern werden hier ionische Celluloseether wie Sulfoethylcellulose oder Carboxymethylcellulose und deren Salze, oder nichtionische Celluloseether, wie Alkylcellulosen, Hydroxyalkylalkylcellulosen oder Hydroxyalkylcellulose, insbesondere Methylcellulose, Methylhydroxyethylcellulose, Methylhydroxypropylcellulose, Hydroxyethylcellulose, Ethylhydroxyethylcellulose, Methylethylhydroxyethylcellulose, Methylhydroxyethylhydroxypropylcellulose, Methylhydroxyethylhydroxybutylcellulose oder Mischungen aus vorgenannten Produkten verstanden.

Die Viskositäten der oben genannten Celluloseether liegen zwischen 400 und 200 000 mPas, gemessen in 2 %iger Lösung bei 20°C in einem Haake Rotationsviskosimeter.

Unter Superabsorbern werden hier vernetzte, organische Polymere verstanden, die in Wasser zwar quellbar, aber nicht löslich sind. Sie quellen mit Wasser auf ein Vielfaches ihres Eigengewichtes an, in einigen Fällen ein Mehrhundertfaches. Chemisch gesehen umfassen sie teilneutralisierte und vernetzte Polyacrylsäuren, (Teil)-Hydrolysate von Stärke-Acrylnitril-Pfropfcopolymeren, (teil-)neutralisierte Stärke-Acrylsäure Pfropfcopolymere, (teil-)verseifte Vinylacetat-Acrylsäureester-Copolymere, (teil-)hydrolysierte Acrylnitril- oder Acrylamidcopolymere, vernetzte Produkte solcher Hydrolysate und Polymere aus vernetzten kationischen Monomeren. Im Einzelnen können in den vernetzten superabsorbierenden Polymeren folgende Monomere allein oder in Kombination enthalten sein:

Acrylsäure, Methacrylsäure, Vinylsulfonsäure, Styrolsulfonsäure, 2-(Meth)acrylamid-2-methylpropansulfonsäure, 2-(Meth)acryloylethansulfonsäure, 2-(Meth)acraloylpropansulfonsäure sowie die Salze der zuvor genannten Säuren. Ferner (Meth)-acrylamid, N-ethyl (meth)acrylate, N,N-dimethylaminopropyl-(meth)acrylate, N,N-dimethylaminopropyl(meth)acrylamide sowie deren quarternäre Salze und Vinylpyrrolidon. Als Vernetzer eignen sich beispielsweise Allylmethacrylat, Diethylenglykoldiacrylat, ethoxyliertes Trimethylolpropantriacrylat, Ethylenglykoldiglycidylether, Methylenbisacrylamid, Tetraallyloxyethan, Triallylamin und Trimethylolpropantriacrylat.Weitere Angaben über Superabsorber sind dem Buch "Modern Superabsorbent Polymer Technology", herausgegeben von Fredric L. Buchholz und Andrew T. Graham, Verlag Wiley-VCH (1998) zu entnehmen.

Die oben aufgeführten Cellulosederivate sind in Wasser löslich und zeigen ein charakteristisches rheologisches Profil, welches sich an Hand von Materialfunktionen der wässrigen Lösung des Cellulosederivats beschreiben lässt. Wässrige Lösung bedeutet hierbei ein System, das Wasser, Cellulosederivat und, soweit vorhanden, Salze und Begleitstoffe aus dem Cellulosederivat und dem verwendeten Wasser, z.B. Leitungswasser, enthält.

Als Materialfunktionen werden üblicherweise die Viskosität η als Funktion der Schergeschwindigkeit γ̇ zur Beschreibung der Fließeigenschaften diskutiert, sowie der Speichermodul G' und der Verlustmodul G" jeweils als Funktion der Kreisfrequenz ω zur Beschreibung der linear-viskoelastischen Eigenschaften.

Die hier verwendeten Symbole folgen den Empfehlungen der Veröffentlichung:

C. L. Sieglaff: "Proposed Nomenclature for Steady Shear Flow and Linear Viscoelastic Behavior", Transactions of the Society of Rheology 20:2 (1976) 311-317.

Im Falle der Viskosität wird in der Regel nicht die gesamte Funktion η(γ̇) angegeben, sondern ein repräsentativer Viskositätswert, der unter definierten Bedingungen bezüglich der Konzentration des Cellulosederivats in der wässrigen Lösung, der Temperatur und der Schergeschwindigkeit bzw. des verwendeten Messgerätes und der Geräteeinstellungen bestimmt wird. Dieses Vorgehen ist dem Fachmann gut bekannt. Allgemein bekannt ist auch, dass in den meisten Fällen die Viskosität der wässrigen Lösung eines Cellulosederivats mit steigender Schergeschwindigkeit abnimmt, die wässrigen Lösungen somit ein pseudoplastisches Fließverhalten aufweisen.

Die linear-viskoelastischen Eigenschaften werden durch Messungen in einer oszillierenden Scherströmung bei kleiner Amplitude und variabler Kreisfrequenz ermittelt. Die Werte für G' und G" werden dabei stark von der Konzentration der Cellulosederivate in der wässrigen Lösung und von der Höhe des repräsentativen Viskositätswertes bestimmt. Es wird daher nachfolgend nur auf den relativen Verlauf von G' und G" mit steigender Kreisfrequenz ω eingegangen. Bei einer Konzentration von 1,5 bis 2 Gewichtsteilen Cellulosederivat auf 100 Gewichtsteile der wässrigen Lösung und einer Temperatur von ca. 20°C verlaufen G' und G" für die Cellulosederivate nach dem Stand der Technik in der Weise, dass bei kleiner Kreisfrequenz ω der Speichermodul G' kleiner als der Verlustmodul G" ist, mit steigender Kreisfrequenz G' aber stärker zunimmt als G" Dabei kann auch der Fall eintreten, dass G' oberhalb einer bestimmten Kreisfrequenz schließlich größer wird als G", die Lösung bei hohen Werten der Kreisfrequenz somit vorwiegend elastisch reagiert.

Für herkömmliche Cellulosederivate ist in wässriger Lösung die Abhängigkeit von der Kreisfrequenz demnach für G' deutlich größer als für G"; insbesondere hängen die linear-viskoelastischen Materialfunktionen Speichermodul G' und Verlustmodul G" im Bereich der Kreisfrequenz ω von 0,1 s⁻¹ bis 1 s⁻¹ in der Weise von der Kreisfrequenz ab, dass die Exponenten n und m der Beziehungen
(1) G' ∝ ωⁿ (Speichermodul verhält sich proportional zur Kreisfrequenz hoch n)
   und
(2) G" ∝ ω^{m} (Verlustmodul verhält sich proportional zur Kreisfrequenz hoch m)
deutlich verschieden sind, wobei für die Celluloseether alleine das Verhältnis von n zu m üblicherweise mehr als 1,20 beträgt.

Man könnte zunächst vermuten, dass die Mischungen von Celluloseether und Superabsorber in wässriger Lösung gelartige rheologische Eigenschaften aufweisen. Dies ist jedoch nicht notwendigerweise der Fall, wenngleich die viskoelastischen Eigenschaften durch den Zusatz von Superabsorbern deutlich beeinflusst werden.

Der Begriff "gelartige rheologische Eigenschaften" wird hier durch die Abhängigkeit der linear-viskoelastischen Materialfunktionen Speichermodul G' und Verlustmodul G" von der Kreisfrequenz ω definiert, angelehnt an die Definition des "Gelpunktes" bekannt aus Arbeiten von Chambon und Winter [siehe: F. Chambon, H. H., Winter: "Linear Viscoelasticity at the Gel Point of a Crosslinking PDMS with Imbalanced Stoichometry", Journal of Rheology 31 (8) (1987) 683-697]; dort wird der Gelpunkt als der Punkt beschrieben, wo die Frequenzabhängigkeit für G' und G" nach den Beziehungen:
(1) G' ∝ ωⁿ (Speichermodul verhält sich proportional zur Kreisfrequenz hoch n)
   und
(2) G" ∝ ω^{m} (Verlustmodul verhält sich proportional zur Kreisfrequenz hoch m)
beschrieben werden kann und die Exponenten n und m gleich groß sind, bzw. das Verhältnis von n zu m einen Wert von 1 erreicht. Die Werte von G' und G" können dabei verschieden sein, es kommt nur darauf an, dass der Logarithmus-von-G' und der Logarithmus von G" jeweils aufgetragen gegen den Logarithmus von ω dieselbe Steigung aufweisen, wobei nur der Bereich der Kreisfrequenz ω von 0,1 s⁻¹ bis 1 s⁻¹ betrachtet wird.

Entsprechende Werte für das Verhältnis von n zu m für Lösungen der Mischungen aus Celluloseether und Superabsorber werden in den Beispielen gegeben; dabei wurden jeweils Lösungen in Wasser bzw. 2 gew.-%-iger Natronlauge bei 20°C untersucht, die insgesamt 1,5 Teile der Mischung auf 100 Teile Lösung enthielten. Offensichtlich entspricht das rheologische Verhalten dieser Lösungen, trotz der vernetzten Komponente, nicht dem gelartigen Verhalten nach der oben gegebenen Definition.

Die Abmischung der Superabsorber mit den Celluloseethern muß nicht separat erfolgen, sondern kann auch "in situ" separat mit den anderen Mörtelbestandteilen erfolgen.

Ein weiterer Gegenstand der Erfindung ist ein Verfahren zur Extrusion mineralischer Massen unter Zumischung der vorstehend beschriebenen Celluloseetherzusammensetzung zur extrudierenden Masse. Erfindungsgemäßer Gegenstand ist dabei ein Verfahren zur Extrusion mineralischer Massen, dadurch gekennzeichnet, dass eine erfindungsgemäße Celluloseetherzusammensetzung als Additiv zu 0,1-6 Gew.-% einer mineralischen Mischung, bestehend aus 20-100 Teilen Bindemittel, 0-70 Teilen Zuschlägen, 0-30 Teilen Leichtzuschlägen, 0-20 Teilen Fasern und eventuell anderen Additiven besteht, mit Wasser zugemischt wird und bis zum Erhalt zu einer homogenen Masse gemischt und/oder geknetet wird und diese Masse durch einen Düsenmund einer Strangpresse extrudiert wird.

Das erfindungsgemäße Verfahren wird durchgeführt, indem alle Rohstoffe in beliebiger Reihenfolge miteinander vermischt werden. Im Allgemeinen werden alle Trockenkomponenten zunächst trocken vorgemischt, dann mit einer bestimmten Menge Wasser versetzt und erneut gemischt. Es ist jedoch auch möglich, die Trockenstoffe mit einer wässrigen Lösung des Additivs (Plastifiziermittels) zu versetzen oder sämtliche Komponenten und das Wasser gleichzeitig zu mischen. Es ist ebenfalls möglich, einen Teil oder alle Sande/Zuschlagsstoffe mit einer Feuchte von weniger als 10 % zuzumischen. Nachdem alle Komponenten miteinander vermischt worden sind, werden sie anschließend in einem Ein- oder Zweiwellenextruder verdichtet und durch ein Mundstück ausgepresst. Es ist möglich, Extuder mit und ohne Vakuumkammer und Extruder mit oder ohne Kühlung einzusetzen. Zwischen Mischen und Extrudieren kann auch noch ein Knetschritt in einem handelsüblichen Kneter eingeschaltet werden.

Die Extrusionstemperatur beträgt dabei 30-65°C, insbesondere 45-65°C, wobei eine für diesen Temperaturbereich sehr gute Qualität der Oberfläche erreicht wurde. Besonders bevorzugt ist der Temperaturbereich von 60 bis 65°C.

Ein weiterer Gegenstand der Erfindung ist ein Verfahren zur Herstellung einer Celluloseetherzusammensetzung die als Additiv zur Extrusion mineralischer Massen eingesetzt wird, dadurch gekennzeichnet, dass man 70-99,9 % Celluloseether mit 0,1-30 % superabsorbierendem Polymer und gegebenenfalls weiteren Additiven im trockenen oder pastösen/gelartigem Zustand mischt.

Ein weiterer Gegenstand der Erfindung ist die Verwendung einer Celluloseetherzusammensetzung als Additiv zur Herstellung zementgebundener Formköper durch Extrusion.

### Beispiele

Die nachfolgenden Beispiele sollen die erfindungsgemäße Verwendung erläutern, ohne die Erfindung zu beschränken:

Durchführung des Abmischens und Extrudierens: 50 Teile Portlandzement CEM I 32,5R, 50 Teile Quarzsand, 5 Teile Fasern und 0,9 Teile Celluloseetherzusammensetzung (alle Teile temperiert) werden zunächst trocken in einem Wirbelbettmischer homogen gemischt, anschließend wird temperiertes Wasser (Mengenangaben siehe unten) zugegeben, die Masse weitergemischt und in einem Kneter (Hersteller Fa. Brabender, Deutschland) einige min geknetet. Anschließend wird die Masse sofort in den Zuführtrog des temperierten Einwellenextruders (Hersteller Händle, Mühlacker, Deutschland) eingefüllt. Die Masse wird durch eine Lochplatte gepresst und zur Entgasung durch die Vakuumkammer geführt, durch eine Profildüse gepresst und auf ein Förderband ausgetragen. Alle extrudierten Massen wurden hinsichtlich ihres Wasserbedarfs auf gleiche Konsistenz eingestellt.

### Beispiel 1 bis 6

Die folgende Tabelle gibt die Resultate der Beispiele 1 bis 6 wieder. Beispiel 1 und 4 sind Vergleichsversuche nach dem Stand der Technik, Beispiel 2, 3, 5 und 6 sind erfindungsgemäße Versuche. Für Beispiele 2 und 3 wurde ein Superabsorber (SAP) auf Basis der Monomeren Acrylsäure/Kaliumacrylat eingesetzt, für Beispiele 5 und 6 ein Superabsorber auf Basis Natriumpolyacrylat.

| Beispiel Nr. | Cellulose-etherzus. setzung | n/m (Verhältnis der rheologisch ermittelten Exponenten) | W/F | Druck (bar) | Temperatur (°C) | Oberfläche | Gesamtnote |
|---|---|---|---|---|---|---|---|
| 1 (172DC3) | 100% MHEC | 1,47 (1,51) | 0,29 | 12,2 | 59-61 | Gering schlechter als gut | + |
| 2 (172DC6) | 97,5% MHEC + 2,5% SAP | 1,40 (1,49) | 0,29 | 11,8 | 61-62 | Gering schlechter als gut | + bis ++ |
| 3 (172DC7) | 95% MHEC + 5% SAP | 1,27(1,56) | 0,295 | 11,1 | 61-63 | gut | ++ |
| 4 (172DC19) | 100% MHEC | 1,47 (1,51) | 0,29 | 13,1 | 58-60 | mittel | Fast + |
| 5 (172DC17) | 97,5% MHEC + 2,5% SAP | 1,38 (1,57) | 0,295 | 12,0 | 58 | Gut | + |
| 6 (172DC18) | 95% MHEC + 5% SAP | 1,44 (1,53) | 0,295 | 12,1 | 58-59 | gut | + bis ++ |
| Anmerkungen: 1.) W/F meint den Wasser/Feststofffaktor. Die eingesetzte Menge Wasser wird nur auf die Sand und Zementmenge gerechnet, Fasern und Additive werden nicht berücksichtigt. Beispielsweise meint ein W/F von 0,29, dass auf 100 g Sand und Zement 29 g Wasser eingesetzt werden. | | | | | | | |
| 2.) Druck meint den gemessenen Druck kurz vor dem Düsenmund. Der Wert ist gemittelt über mindestens sechs Messungen. | | | | | | | |
| 3.) Die Gesamtnote liegt zwischen ++ (=sehr gut) und - (=sehr schlecht). | | | | | | | |
| 4.) Werte für das Exponenten-Verhältnis n/m: Angaben für Lösungen der Mischungen aus Celluloseether und Superabsorber in Wasser, Werte in Klammern für Lösungen in einem Lösungsmittel aus 98 Gewichtsteilen Wasser und 2 Gewichtsteilen Natriumhydroxid je 100 Gewichtsteilen Lösungsmittel. Die Lösungen enthielten jeweils 1,5 Gewichtsteile der Mischungen und 98,5 Gewichtsteile Lösungsmittel. | | | | | | | |
| 5.) Bei allen mit "MHEC"angegebenen Methylcellulosen handelt es sich um Methylhydroxyethylcellulosen mit einer Viskosität von 75-85000 mPas, gemessen bei 20°C in 2%-iger Lösung in einem Haake-Rotationsviskosimeter. | | | | | | | |

## Patentansprüche

1. Celluloseetherzusammensetzung als Additiv zur Extrusion mineralischer Massen, enthaltend 70 bis 99,9 Gew.-% Celluloseether und 0,1 bis 30 Gew.-% superabsorbierendes Polymer.

2. Celluloseetherzusammensetzung als Additiv zur Extrusion mineralischer Massen gemäß Anspruch 1, **dadurch gekennzeichnet, dass** die Celluloseetherzusammensetzung ionische Celluloseether aus der Gruppe Carboxymethylcellulose und Sulfoethylcellulosen sowie deren Salze enthält oder nichtionische Celluloseether, wie Methylcellulose, Methylhydroxyethylcellulose, Methylhydroxypropylcellulose, Hydroyethylcellulose, Ethylhydroxyethylcellulose, Methylethylhydroxyethylcellulose, Methylhydroxyethylhydroxybutylcellulose oder deren Mischungen enthält.

3. Celluloseetherzusammensetzung als Additiv zur Extrusion mineralischer Massen gemäß Anspruch 1 oder 2, **dadurch gekennzeichnet, dass** das superabsorbierende Polymer ein vernetztes organisches Polymer ist.

4. Celluloseetherzusammensetzung als Additiv zur Extrusion mineralischer Massen gemäß Anspruch 1 bis 3, wobei die mineralischen Massen zement-, gips-, kalkhydrat-, silikat-, flugasche-, tongebundene oder keramische Massen sind.

5. Verfahren zur Extrusion mineralischer Massen, **dadurch gekennzeichnet, dass** eine Celluloseetherzusammensetzung gemäß einem der Ansprüche 1 bis 4 zu 0,1 bis 6 Gew.-% einer mineralischen Mischung, bestehend aus 20 bis 100 Teilen Bindemittel, 0 bis 70 Teilen Zuschlägen, 0 bis 30 Teilen Leichtzuschlägen, 0 bis 20 Teilen Fasern und eventuell anderen Additiven besteht, mit Wasser zugemischt wird und bis zum Erhalt einer homogenen Masse gemischt und/oder geknetet wird und die Masse durch einen Düsenmund einer Strangpresse extrudiert wird.

6. Verfahren nach Anspruch 5, **dadurch gekennzeichnet, dass** die Temperatur der zu extrudierenden Masse am Düsenmund 30 bis 65°C beträgt.

7. Verfahren zur Herstellung einer Celluloseetherzusammensetzung die als Additiv zur Extrusion mineralischer Massen eingesetzt wird, **dadurch gekennzeichnet, dass** man 70 bis 99,9 % Celluloseether mit 0,1 bis 30 % superabsorbierendem Polymer und gegebenenfalls weiteren Additiven im trockenen oder pastösen/gelartigem Zustand mischt.

8. Verwendung einer Celluloseetherzusammensetzung gemäß einem der Ansprüche 1 bis 4 als Additiv zur Herstellung zementgebundener Formköper durch Extrusion.
